# EUROPÄISCHE PATENTSCHRIFT

(11) **EP 2 663 788 B1**
(45) Veröffentlichungstag und Bekanntmachung des Hinweises auf die Patenterteilung: **26.08.2015**
(21) Anmeldenummer: 11796930.3
(22) Anmeldetag: 15.12.2011
(51) Int. Cl.: F16F 13/14

(54) **FEDER- UND DÄMPFERSYSTEM, INSBESONDERE FÜR EINE AGGREGATELAGERUNG IN EINEM KRAFTFAHRZEUG**
SPRING AND DAMPER SYSTEM, IN PARTICULAR FOR AN ASSEMBLY MOUNT IN A MOTOR VEHICLE
SYSTÈME RESSORT ET AMORTISSEUR, EN PARTICULIER POUR LA SUSPENSION D'UN GROUPE DANS UN VÉHICULE AUTOMOBILE

(30) Priorität: 14.01.2011 DE 102011008625
(43) Veröffentlichungstag der Anmeldung: 20.11.2013
(73) Patentinhaber: Audi AG, 85045 Ingolstadt (DE)
(72) Erfinder: LAMERS, Stephan, 93336 Altmannstein (DE); CONRAD, Thomas, 91757 Treuchtlingen (DE)
(86) Internationale Anmeldenummer: PCT/EP2011/006327
(87) Internationale Veröffentlichungsnummer: WO 2012/095141

(56) Entgegenhaltungen:
- EP-A1- 1 387 111
- EP-A2- 1 467 119
- DE-T2- 60 110 534
- JP-A- 2001 241 490
- US-A1- 2006 071 379

## Beschreibung

Die Erfindung betrifft eine Aggregatelagerung in einem Fahrzeug, insbesondere in einem Kraftfahrzeug, gemäß dem Oberbegriff des Patentanspruches 1.

Hilfsrahmen- bzw. Aggregatelager für Kraftfahrzeuge, die hier übergreifend als Aggregatelager bezeichnet werden, sind vielfach bekannt und dienen in ihrer Auslegung sowohl zur Dämpfung hochfrequenter Schwingungen als auch zur Aufnahme statischer und dynamischer Belastungen bzw. zur Abstützung der Aggregate- und/oder Fahrzeugbewegungen, unter anderem in Vertikalrichtung. Zur Aufnahme besonders hoher Lasten sind gummielastische Anschläge oder Federn vorgesehen, die nach einem definiertem Federweg s (Aus- oder Einfederweg) zur Wirkung kommen und die Federrate der Lager entsprechend erhöhen. Um die erwünschte Federkennlinie mit weicheren und zunehmend härteren Federraten zu erreichen, sind die Aggregatelager relativ exakt auf den Fahrzeugtyp bzw. nach dem Fahrzeuggewicht, den Aggregateausstattungen, etc. abzustimmen, um komfortmindernde Kennlinienverschiebungen zum Beispiel aufgrund von Zuladungen, etc. zu vermeiden.

Aus der JP 2001241490 A ist ein Hydraulikkammern aufweisendes, hydraulisch dämpfendes Lager bekannt, bei dem ein Lagerkern über ein Elastomerelement an einer Außenhülse angebunden ist. Ferner ist ein am Lager ein Gummipuffer vorgesehen, der einen Spaltabstand zu einem fahrzeugseitigen Anschlaggegenelement aufweist, so dass der Gummipuffer erst nach Überwinden des Spaltabstandes in Anlage am Anschlaggegenelement kommt und eine progressive Federkennlinie bewirkt. Ähnliche Lager sind auch aus der EP 1 467 119 A2, der US 2006/0071379 A1, der EP 1 387 111 A1 und aus der DE 601 10 534 T2 bekannt.

Aufgabe der Erfindung ist es, ein Feder- und Dämpfersystem, insbesondere für eine Aggregatelagerung in einem Kraftfahrzeug, vorzuschlagen, das mit baulich einfachen Mitteln universell einsetzbar ist bzw. sich automatisch auf unterschiedliche Belastungskriterien einstellt.

Die Lösung dieser Aufgabe gelingt erfindungsgemäß mit den Merkmalen des Patentanspruches 1. Vorteilhafte und besonders zweckmäßige Weiterbildungen der Erfindung sind in den Unteransprüchen angeführt.

Gemäß Anspruch 1 wird eine Aggregatelagerung in einem Fahrzeug, insbesondere in einem Kraftfahrzeug, mit einem Feder- und Dämpfersystem mit wenigstens einem Feder-/Dämpferelement vorgeschlagen, das zwischen zwei relativ zueinander verlagerbaren Fahrzeugmassen angeordnet ist, wobei das wenigstens eine Feder-/Dämpferelement eine Dämpfereinrichtung sowie ein Positionierfederelement aufweist, die mittelbar oder unmittelbar miteinander gekoppelt sowie in Reihe geschaltet sind und die sich an der jeweils zugeordneten Fahrzeugmasse abstützen und/oder dort angebunden sind. Weiter ist auf der dämpferabgewandten Positionierfederelementseite des Feder-/Dämpferelementes ein weiteres ein- oder mehrteiliges Federelement in Form eines Progressionsfederelementes als weiterer Bestandteil des Feder-/Dämpferelementes angeordnet, das, mittelbar oder unmittelbar, an der Dämpfereinrichtung und/oder an der positionierfederelementseitigen Fahrzeugmasse angebunden ist und das in einer definierten Grundstellung einen definierten, progressionsfederelementseitigen Spaltabstand als freien Federweg ausbildet. Bevorzugt ist hierbei die Größe des Progressionsfederelement-Spaltabstandes durch die Länge des entspannten Positionierfederelementes vorgegeben und wird nur geringfügig durch Störgrößen der auf geschwindigkeitsabhängigen Kraftaufbau ausgelegten Dämpfereinrichtung, wie zum Beispiel dem Hystereseverhalten beeinflusst. Erfindungsgemäß sind zwei Feder-/ Dämpferelemente Bestandteil eines hydraulisch dämpfendes Aggregatelagers, mit einem zum Beispiel an einer Karosserie als Fahrzeugmasse befestigten Lagerkern und einem an einem tragenden Bauteil, zum Beispiel einem Hilfsrahmen, als weiterer Fahrzeugmasse befestigten Außengehäuse sowie mit einer zwischen dem Außengehäuse und dem Lagerkern eingesetzten Stützwand mit einer gummielastischen Tragfeder, die das Außengehäuse in eine obere und eine untere, geschlossene Hydraulikkammer unterteilen. Die mit Flüssigkeit befüllten Hydraulikkammern sind über zumindest eine Drosseleinrichtung mit definiertem Durchströmquerschnitt miteinander verbunden. Zwischen dem Lagerkern und dem Außengehäuse sind in entgegengesetzte Richtungen wirkende Anschläge als Progressionsfederelemente vorgesehen, wobei jeder Anschlag über zumindest eine je Hydraulikkammer vorgesehene, teleskopisch in sich verschiebbare, volumenveränderliche Dämpfereinrichtung gehalten ist, welche Dämpfereinrichtungen andererseits an der Stützwand des Lagerkerns abgestützt und über in der Stützwand vorgesehene Drosseleinrichtungen mit definiertem Durchströmquerschnitt miteinander verbunden sind, wobei ferner zwischen dem Außengehäuse und den Anschlägen jeweils eine Stellfeder als Positionierfederelement vorgesehen ist. Die Stellfedern mit geringerer Federsteifigkeit führen die Anschläge bei einer langsamen quasistatischen Verschiebung vom Lagerkern zum Außengehäuse in Vertikal- oder z-Richtung, zum Beispiel infolge einer Zuladungsveränderung, nach, um den freien Federweg der gummielastischen Tragfeder bis zum Einsatz der Anschläge aufrecht zu erhalten. Bei höherer, dynamischer Belastung wirken die Dämpfereinrichtungen aufgrund der integrierten Drosseleinrichtungen als hydraulischer Dämpfer bis hin zu deren Blockierung, wodurch der Großteil der dynamischen Last vom Lagerkern über die jeweilige Dämpfereinrichtung und die Anschläge auf das Außengehäuse übertragen wird.

Die Fahrzeugmassen werden hier bevorzugt durch einen Hilfsrahmen und eine Fahrzeugkarosserie, durch einen Hilfsrahmen und ein Antriebsaggregat oder durch eine Fahrzeugkarosserie und ein Antriebsaggregat gebildet, zwischen denen wenigstens ein erfindungsgemäßes Feder- und Dämpfersystem als Aggregatelager angeordnet ist. An dieser Stelle sei ausdrücklich erwähnt, dass im Rahmen der vorliegenden Offenbarung die Begrifflichkeit Aggregatelager oberbegriffsartig und in einem umfassenden Sinne zu verstehen ist. So wird unter einem Aggregatelager im erfindungsgemäßen Sinne auch ein Hilfsrahmenlager zwischen Hilfsrahmen und Karosserie verstanden, insbesondere ein Hilfsrahmenlager, das im quasistatischen Fahrzeugzustand in Vertikalrichtung (z) vorbelastet ist, wobei die Vorlast insbesondere abhängig von der jeweiligen kinematischen Anordnung einer Fahrzeug-Tragfeder als Hauptfeder, der kinematischen Lage der Hilfsrahmenlager selbst (insbesondere xy-Position gemäß Fahrzeugkoordinatensystem) und dem Fahrzeuggewicht ist, das je nach Beladungszustand oder Fahrzeugausführung variieren kann. Die Vorlast kann sowohl positiv als auch negativ gerichtet sein.

Des weiteren werden unter dem Begriff Aggregatelager auch klassische Aggregatelager zwischen einem Hilfsrahmen und einem Aggregat (Motor oder Getriebe) oder zwischen einer Karosserie und einem Aggregat (Motor oder Getriebe) verstanden, wobei hier jeweils bevorzugt vorgesehen ist, dass deren Vorlast abhängig ist von der Masse des abgestützten Aggregates und der kinematischen Lage der Aggregatelager selbst.

Grundsätzlich soll der Begriff Aggregatelager somit sämtliche Lager eines Kraftfahrzeugs umfassen, in denen die Erfindung in Alleinstellung oder in Verbindung mit weiteren Bauteilen oder Systemen zum Einsatz kommen kann

Mit einem derartigen erfindungsgemäßen Aufbau lässt sich somit, zum Beispiel in Verbindung mit einem Aggregatelager als Feder- und Dämpfersystem, ein definierter Komfortweg bis zur Progression auf passive Weise einstellen, ohne dass auf Komforteigenschaften verzichtet werden muss. Denn mit einem erfindungsgemäßen Feder- und Dämpfersystem gelingt auf einfache Weise eine vorlastunabhängige, insbesondere z-positionsunabhängige (die z-Richtung soll hier gleich der Fahrzeughochachsenrichtung sein) Kennlinienprogression.

Insbesondere kann das wenigstens eine Feder-/Dämpferelement so ausgelegt werden, dass bei einer definierten Belastung, insbesondere bei einer definierten statischen oder quasistatischen langsamen Relativverlagerung der Fahrzeugmassen in Funktionsrichtung des Feder-/Dämpferelementes zueinander, das relativ weich ausgelegte Positionierfederelement die Dämpfereinrichtung mit geringer Kraft mittel- oder unmittelbar langsam so nachführt, dass sich wieder ein Progressionsfederelement-Spaltabstand, insbesondere in etwa der Progressionsfederelement-Spaltabstand der Grundstellung, einstellt, während bei einer demgegenüber definiert größeren, insbesondere dynamischen Relativverlagerung der Fahrzeugmassen in Funktionsrichtung des Feder-/Dämpferelementes zueinander, das Positionsfederelement nicht genügend Kraft mittel- oder unmittelbar auf die Dämpfereinrichtung überträgt, um einen Längenausgleich der Dämpfereinrichtung zu bewirken, und die Dämpfereinrichtung deshalb mittelbar oder unmittelbar nach Überbrückung des Progressionsfederelement-Spaltabstandes in eine Anlage- und Wirkverbindung mit dem Progressionsfederelement geht und dann zusätzlich zur relativ geringen Federkraft des Positionsfederelementes auch die relativ hohe Federkraft des Progressionsfederelementes überträgt. Die Dämpfereinrichtung kann dabei in an sich bekannter Weise mittels darin integrierter Elemente konstruktiv so ausgelegt sein, dass auch andere als proportionale Abhängigkeiten zwischen Dämpferkraft und Längenänderungsgeschwindigkeit der Dämpfereinrichtung realisiert werden, so das im Extremfall auch ein Blockieren der Dämpfereinrichtung bei Erreichen einer Schwell-Dämpferkraft möglich wird, wodurch dann eine im Rahmen der Bauteilfestigkeit der Dämpfereinrichtung beliebig hohe Kraft ohne Längenänderung der Dämpfereinrichtung mittels des Progressionsfederelements zwischen den beiden über das Feder-/Dämpferelement gekoppelten Fahrzeugmassen übertragen werden kann.

Grundsätzlich können das Positionierfederelement und das Progressionsfederelement durch mehrere separate Federelemente oder mehrere an einem Bauteil ausgebildete Federelementabschnitte gebildet sein, um eine einfache funktionale Trennung der Bauteile zu ermöglichen. Gemäß einer hierzu alternativen Ausgestaltung kann aber auch vorgesehen sein, dass das Positionierfederelement und das Progressionsfederelement durch ein einziges Federelement, insbesondere durch ein Elastomerelement, gebildet ist, das eine progressive Federkennlinie aufweist, insbesondere eine progressive Federkennlinie mit einer ab einem definierten Verlagerungsweg stark ansteigenden hoher Progression.

Baulich und fertigungstechnisch besonders günstig kann das Aggregatelager im Wesentlichen rotationssymmetrisch mit einem trommelförmigen Außengehäuse, einem durch eine Anschlusshülse und eine ringscheibenförmige Stützwand gebildeten Lagerkern und einer ringförmig zwischen der Stützwand und den Umfangswänden des Außengehäuses fest verbundenen. Tragfeder gebildet sein, wobei die Dämpfungseinrichtungen in den Hydraulikkammern durch teleskopisch ineinander verschiebbare Ringzylinder ausgeführt sind, von denen jeweils ein Ringzylinder den zum Beispiel ringförmig ausgeführten Anschlag trägt und der andere, korrespondierende Ringzylinder an der Stützwand abgestützt ist.

Demzufolge können auch die Stellfedern ringförmig um die die Anschläge tragenden Ringzylinder angeordnet sein und jeweils in Verbindung mit innerhalb der Ringzylinder eingesetzten, ringförmigen Wänden die Hydraulikkammern nach oben bzw. unten begrenzen. Daraus resultiert ein relativ einfacher, konstruktiv gut beherrschbarer Lageraufbau mit wenigen, in das Außengehäuse des Aggregatelagers einsetzbaren Bauteilen.

Die Stellfedern können zur Erzielung einer besonders robusten Konstruktion mit V-förmig nach außen abragenden Wänden an den Umfangswänden des Außengehäuses abgestützt sein, wobei sich deren Federeigenschaften definiert einstellen lassen.

Des Weiteren können zur Einstellung gezielter Dämpfungseigenschaften des Aggregatelagers in der Stützwand zwischen den Hydraulikkammern Überströmkanäle zwischen den Dämpfungseinrichtungen und weitere Überströmkanäle zwischen den Hydraulikkammern vorgesehen sein, wobei zumindest in die Überströmkanäle zwischen den Dämpfungseinrichtungen Drosselventile definierten Durchströmquerschnittes eingesetzt sind.

Dabei können ferner zur Sicherstellung eines die Lagerfunktion verbessernden Flüssigkeitsaustausches die Überströmkanäle der Hydraulikkammern und der Dämpfungseinrichtungen durch Querkanäle mit gegebenenfalls eingesetzten Drosselventilen miteinander verbunden sein.

Fertigungstechnisch besonders günstig können die das Aggregatelager nach oben und unten abschließenden Stellfedern, die Anschläge und die ringförmigen Wände fest durch Kleben, Vulkanisieren, etc. zu einer Vormontageeinheit mit den korrespondierenden Ringzylindern verbunden sein, die zum Beispiel nach dem Befestigen einer Tragfeder im Außengehäuse montierbar sind.

Die ringförmige Tragfeder kann aus zumindest zwei, durch eine Metallhülse miteinander fest verbundenen Ringkörpern mit partiellen Aussparungen gebildet sein, um die Federkennlinie der Tragfeder gezielt einstellen zu können.

Die Formulierung von etwaigen Verfahrensansprüchen mit einem oder mehreren Merkmalen der vorliegend und nachstehend beschriebenen Erfindungsidee behält sich der Anmelder ausdrücklich vor.

Die Erfindung wird nachfolgend anhand eines konkreten Ausführungsbeispiels sowie anhand mehrerer Prinzipskizzen näher erläutert. Die schematischen Figuren zeigen in:
- Fig. 1a bis 1d: schematische Prinzipskizzen zur Erläuterung des allgemeinen Funktionsprinzipes eines Feder-/Dämpferelementes;
- Fig. 1e: eine schematische Prinzipskizze des allgemeinen Funktionsprinzipes des Aggregatelagers gemäß Fig. 2;
- Fig. 2: einen Längsschnitt durch ein hydraulisch dämpfendes Aggregatelager für einen Hilfsrahmen für ein Kraftfahrzeug, mit einem Außengehäuse, einem Lagerkern mit einer Stützwand und einer Tragfeder und mit in Hydraulikkammern des Aggregatelagers eingesetzten Dämpfungseinrichtungen, die über Stellfedern mit dem Außengehäuse zusammenwirkende Anschläge tragen;
- Fig. 3: das Aggregatelager gemäß Fig. 2 mit einer durch eine statische Gewichtslast verlagerten Tragfeder und über die Dämpfungseinrichtungen zur Aufrechterhaltung des Ein- und Ausfederweges s entsprechend nachgeführten Anschlägen;
- Fig. 4a: eine Prinzipskizze des Aggregatelagers in einer Mittelstellung gemäß Fig. 2, die zum Beispiel der Konstruktionslage des Kraftfahrzeuges mit definierter, statischer Gewichtslast entspricht;
- Fig. 4b: eine weitere Prinzipskizze des Aggregatelagers in dynamisch voll ausgefederter Position, bei der der obere Anschlag mit dem Außengehäuse zusammenwirkt;
- Fig. 4c: eine weitere Prinzipskizze des Aggregatelagers in einer eingefederten Position, zum Beispiel bei einer hohen statischen Last bzw. einer entsprechenden Beladung des Kraftfahrzeuges.

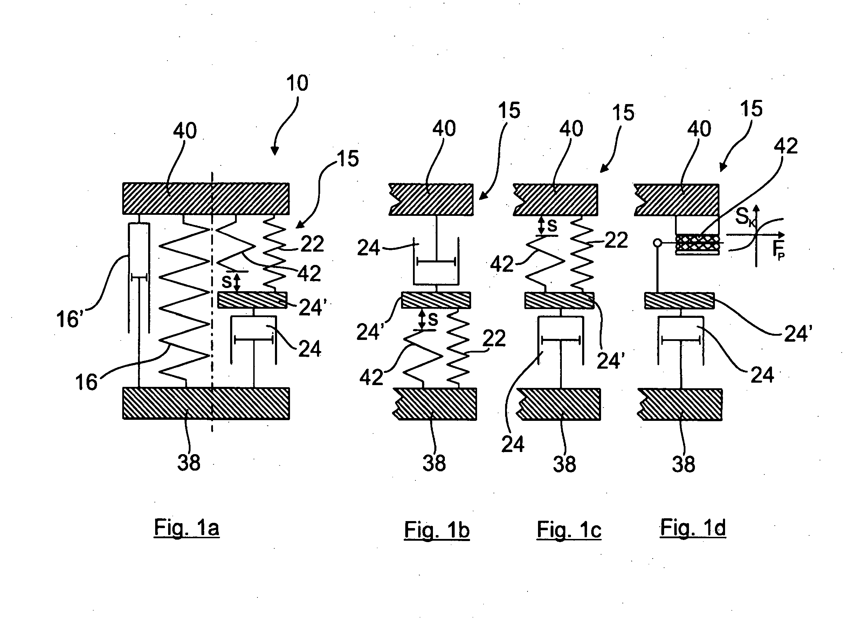

In den Fig. 1a bis 1e ist das allgemeine Funktionsprinzip eines Feder-/Dämpferelementes anhand von unterschiedlichen Prinzipskizzen näher erläutert, wobei gleiche Teile mit gleichen Bezugszeichen versehen sind:

In der Fig. 1a ist ein in eine Bewegungsrichtung wirkendes nichterfindungsgemäßes Feder- und Dämpfersystem 10 als zum Beispiel Aggregatelagerung in einem Kraftfahrzeug mit einem einzigen Feder/Dämpferelement 15 gezeigt, das zwischen zwei relativ zueinander verlagerbaren Fahrzeugmassen 38 und 40, insbesondere zwischen einem Hilfsrahmen 38 und einer Fahrzeugkarosserie 40, angeordnet ist, wobei das Feder-/Dämpferelement 15 eine Dämpfereinrichtung 24, ein Positionierfederelement 22 sowie ein Progressionsfederelement 42 umfasst, wobei die Dämpfereinrichtung 24 und das Positionierfederelement 22 miteinander gekoppelt sowie in Reihe geschaltet sind, hier beispielhaft über ein Koppelelement 24', die sich an der jeweils zugeordneten Fahrzeugmasse 38 bzw. 40 abstützen und dort angebunden sind. Auf der dämpfereinrichtungsabgewandten Positionierfederelementseite des Feder-/Dämpferelementes 15 ist das hier zum Beispiel einteilig ausgebildete Progressionsfederelement 42 als weiterer Bestandteil des Feder-/ Dämpferelementes 15 angeordnet, das funktioneller Bestandteil des Feder-/ Dämpferelementes 15 ist und hier an der positionierfederelementseitigen Fahrzeugmasse 40 angebunden ist und das in der in der Fig. 1a gezeigten Grundstellung bzw. Konstruktionslage einen definierten, progressionsfederelementseitigen Spaltabstand s als weichen Federweg mit relativ geringer Steifigkeit des Feder- und Dämpfersystems 15 ausbildet, hier als unmittelbarer Spaltabstand s zum Koppelelement 24' bzw. zur Dämpfereinrichtung 24. Das Koppelelement 24' kann integral, insbesondere einstückig mit der Dämpfereinrichtung 24 ausgebildet sein oder aber auch durch ein separates Bauteil gebildet sein, das fest mit der Dämpfereinrichtung 24 verbunden ist.

Das Feder-Dämpferelement ist hier so ausgelegt, dass das Positionierfederelement 22 die Dämpfereinrichtung 24 bei einer definierten Belastung, insbesondere bei einer definierten statischen oder quasistatischen Belastung, und einer dadurch bedingten langsamen Relativverlagerung der beiden Fahrzeugmassen 38, 40 so nachführt, dass der ProgressionsfederelementSpaltabstand s der Grundstellung beibehalten wird, während bei einer demgegenüber definiert größeren, insbesondere dynamischen, Belastung, das Positionsfederelement 22 nicht genug Kraft mittel- oder unmittelbar auf die Dämpfereinrichtung 24 überträgt, um einen Längenausgleich der Dämpfereinrichtung 24 zu bewirken, und die Dämpfereinrichtung 24 deshalb über das Koppelelement 24' mittelbar nach Überbrückung des Progressionsfederelement-Spaltabstandes s in eine Anlage- und Wirkverbindung mit dem Progressionsfederelement 42 geht und dann zusätzlich zur relativ geringen Federkraft des Positionsfederelementes 22 auch die relativ hohe Federkraft des Progressionsfederelementes 42 überträgt. Die Dämpfereinrichtung 24 kann dabei in an sich bekannter Weise mittels integrierter Elemente konstruktiv so ausgelegt sein, dass auch andere als proportionale Abhängigkeiten zwischen Dämpferkraft und Längenänderungsgeschwindigkeit der Dämpfereinrichtung 24 realisiert werden, so das im Extremfall auch ein Blockieren der Dämpfereinrichtung 24 bei Erreichen einer Schwell-Dämpferkraft möglich wird.

Das in der Fig. 1a gezeigte Feder- und Dämpfersystem weist weiter eine zwischen den zwei relativ zueinander verlagerbaren Fahrzeugmassen 38, 40 angeordnete Zusatzfederanordnung auf, die hier parallel zu dem im Wesentlichen durch die Bauteile 22, 24, 42 gebildeten Feder-/Dämpferelement 15 geschaltet ist. Die Zusatzfederanordnung ist hier durch ein konventionelles Feder-/Dämpferelement mit einer Tragfeder 16, die zu einer Stoßdämpfereinrichtung 16' parallel geschaltet ist, gebildet. Bei entsprechenden Ein- oder Ausfederungen der Zusatzfederanordnung ergibt sich je nach der Art der Belastung eine der zuvor ausführlich beschriebenen Belastungssituationen im Bereich des durch die Bauteile 22, 24, 42 gebildeten Feder-/Dämpferelements 15.

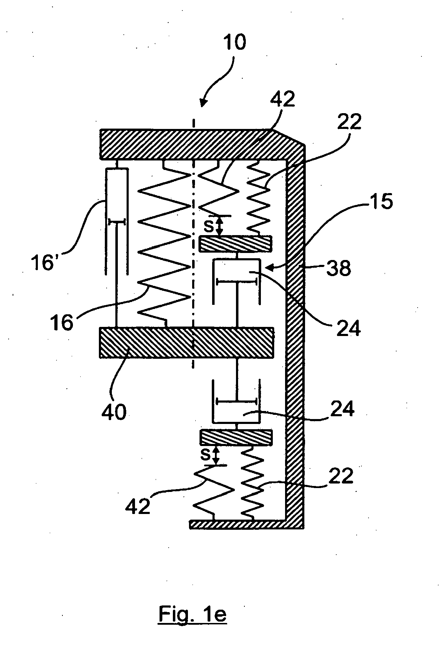

In der Fig. 1b ist eine zur Fig. 1 a alternative nicht-erfindungsgemäße Ausgestaltung gezeigt, bei der lediglich aus Gründen der Einfachheit die linke Seite mit der Zusatzfederanordnung nicht mehr mit dargestellt ist. Konkret ist hier das Feder-/ Dämpferelement umgekehrt zur Fig. 1a angeordnet, und zwar dergestalt, dass hier die Positionierfeder 22 und die Progressionsfeder zwischen der Fahrzeugmasse 38 und der Dämpfereinrichtung 24 liegen, während sich die Dämpfereinrichtung 24 nunmehr an der Fahrzeugmasse 40 abstützt. Ansonsten entsprechen der Aufbau und die Funktionsweise demjenigen bzw. derjenigen der Fig. 1a.

In der Fig. 1c ist eine weitere nicht-erfindungsgemäße Abwandlung der Fig. 1a gezeigt, bei der ebenfalls wiederum lediglich aus Gründen der Einfachheit die linke Seite mit der Zusatzfederanordnung nicht mehr mit dargestellt ist. Hier ist das Progressionsfederelement nunmehr dämpferseitig, hier beispielhaft am Koppelelement 24' der Dämpfereinrichtung 24, angebunden und weist einen Spaltabstand s zur Fahrzeugmasse 40 hin auf. Ansonsten entsprechen der Aufbau und die Funktionsweise demjenigen bzw. derjenigen der Fig. 1a.

Während das Positionierfederelement 22 und das Progressionsfederelement 42 bzw. 28 und 42 bisher jeweils so dargestellt worden sind, dass diese durch separate Federelemente gebildet sind, versteht es sich, dass das Positionierfederelement 22 und das Progressionsfederelement 42 auch durch mehrere an einem Bauteil ausgebildete Federelementabschnitte gebildet sein können oder dass das Positionierfederelement 22 und das Progressionsfederelement 42 durch ein einziges Federelement gebildet sein können, wie dies beispielhaft in der nicht-erfindungsgemäßen Fig. 1d in Verbindung mit einem Elastomerelement 42 gezeigt ist, wobei das Elastomerelement 42 eine progressive Federkennlinie aufweist, insbesondere eine progressive Federkennlinie mit einer ab einem definierten Verlagerungsweg stark ansteigenden hoher Progression.

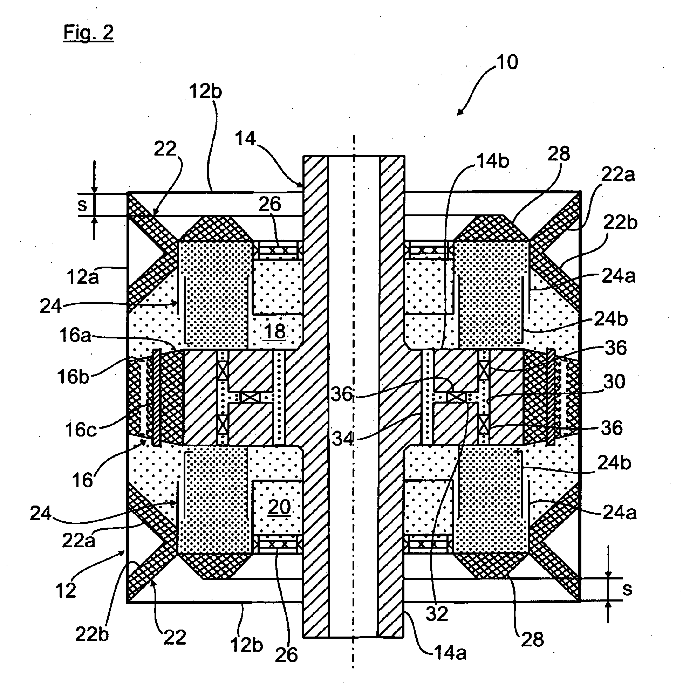

In der Fig. 1e ist ein vom Prinzip her der nachfolgenden Fig. 2 entsprechender erfindungsgemäßer Aufbau gezeigt, bei der eine Tragfeder 16 mitsamt einer Stoßdämpfereinrichtung 16' als konventionelles Feder-/Dämpferelement wiederum gemäß der Ausführungsform der Fig. 1a bis 1d funktionell parallel zu den jeweils durch die Bauteile 22, 24, 42 gebildeten Feder-/Dämpferelementen 15 geschaltet ist.

In der Fig. 2 soll schematisch eine konkrete Umsetzung der Erfindungsidee in Verbindung mit einem hydraulisch dämpfenden Aggregatelager 10 lediglich beispielhaft näher erläutert und dargestellt werden. Dieses in der Fig. 2 gezeigte Aggregatelager 10 weist ein rotationssymmetrisches, trommelförmiges Außengehäuse 12, einen Lagerkern 14 mit einer Anschlussbüchse 14a und einer angeformten Stützwand 14b sowie eine Tragfeder 16 auf, die sich aus zwei ringförmigen Lagerkörpern 16a, 16b und einem dazwischen eingefügten Metallring 16c zusammensetzt.

Die gummielastische Tragfeder 16 ist an dem Außenumfang der Stützwand 14b und an der Umfangswand 12a des Außengehäuses 12 befestigt bzw. anvulkanisiert und trägt die auf den Lagerkern 14 wirkende Grundlast auf das Aggregatelager 10.

Das Aggregatelager 10 ist dabei in nicht dargestellter Weise mit seinem Außengehäuse 12 zum Beispiel an einem Hilfsrahmen des Kraftfahrzeuges als erster Fahrzeugmasse befestigt, während die aus dem Außengehäuse 12 vorragende Anschlussbüchse 14a des Lagerkerns 14 mit einer Fahrzeugkarosserie bzw. einem Aufbau des Kraftfahrzeuges (zum Beispiel an einem Längsträger oder Querträger) als zweiter Fahrzeugmasse verschraubt sein kann. An dem Hilfsrahmen können zum Beispiel in bekannter Weise Radführungsteile angelenkt und/oder ein Antriebsaggregat (Motor und/oder Getriebe) aufgesetzt sein. Die Begrifflichkeit Aggregatelager ist hier ausdrücklich in einem weiten Sinne zu verstehen. Selbstverständlich kann ein derartiges Aggregatelager auch zwischen einer Fahrzeugkarosserie bzw. einem Hilfsrahmen und einem Antriebsaggregat Verwendung finden, um noch einige weitere Beispiele zu nennen.

Die Stützwand 14b und die Tragfeder 16 unterteilen das Außengehäuse 12 in eine obere und eine untere, ringförmige Hydraulikkammer 18, 20, die mit einer Hydraulikflüssigkeit befüllt sind (durch Punkte angedeutet).

Die Hydraulikkammern 18, 20 sind nach oben und nach unten jeweils durch eine an die Umfangswand 12a angrenzende, ringförmige und hier ein Positionierfederelement ausbildende Stellfeder 22, in die Hydraulikkammern 18, 20 integrierte Dämpfungseinrichtungen 24 und durch ringförmige, an die Anschlussbüchse 14a angrenzende, gummielastische Ringwände 26 mit Blähwandfunktion abgeschlossen.

Die Dämpfungseinrichtungen 24 setzen sich jeweils aus zwei teleskopisch ineinander verschiebbaren, ein ringförmiges Volumen bildenden und ebenfalls mit Hydraulikflüssigkeit befüllten Ringzylindern 24a, 24b zusammen, wobei der jeweils äußere, der Stirnwand 12b des Außengehäuses 12 zugewandte Ringzylinder 24a hier eine Art Koppelelement ausbildet und einen zum Beispiel ringförmigen, gummielastischen Anschlag 28 trägt, der ein Progressionsfederelement ausbildet und in der gezeichneten Mittelstellung des Aggregatelagers 10 einen Progressionsfederelement-Spaltabstand s als für die Tragfeder 16 freien Einfederweg (unten) bzw. als Ausfederweg (oben) zur als Gegenanschlag dienenden Stirnwand 12b des Außengehäuses 12 aufweist.

Der jeweils innere Ringzylinder 24b der Dämpfungseinrichtungen 24 ist an der Stützwand 14b des Lagerkerns 14 abgestützt. Die beiden Ringzylinder 24a, 24b sind über in der Stützwand 14b vorgesehene Durchströmkanäle 30 miteinander verbunden. Die Durchströmkanäle 30 sind ferner über Querkanäle 32 mit benachbarten Durchströmkanälen 34 verbunden, die wie ersichtlich ist in die beiden Hydraulikkammern 18, 20 münden.

In die Durchströmkanäle 30, 32 definierten Querschnittes sind ferner Drosselventile 36 eingesetzt, die die Dämpfungseigenschaften der Dämpfungseinrichtungen 24, aber auch die der Hydraulikkammern 18, 20 bei dynamischer Belastung frequenzabhängig bestimmen.

Die mit V-förmig zur Umfangswand 12a divergierenden Wänden 22a, 22b ausgeführten Stellfedern 22 weisen eine geringere Federhärte als die Tragfeder 16 und als die gummielastischen Anschläge 28 auf.

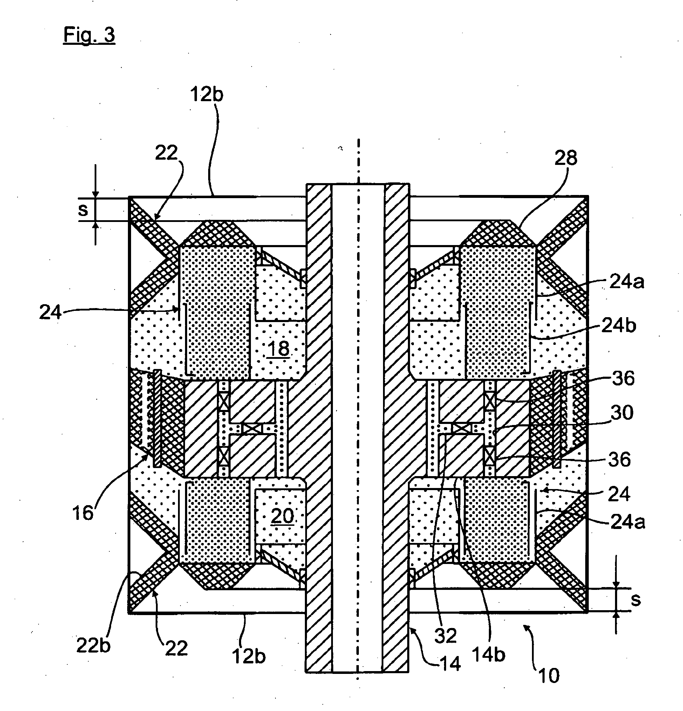

Wird das in Fig. 2 dargestellte Aggregatelager 10 - dessen gezeichnete Mittelstellung einer definierten Grundlast (Grundstellung oder Konstruktionslage) entspricht - zum Beispiel durch höhere Zuladung statisch belastet, so nimmt dieses die in Fig. 3 gezeigte Stellung ein, bei der der Lagerkern 14 und die Tragfeder 16 nach unten verlagert werden. Dies würde dazu führen, dass der untere Anschlag 28 an der Stirnwand 12b des Außengehäuses 12 zur Anlage kommt bzw. der Progressionsfederelement-Spaltabstand s aufgebraucht ist und sich dementsprechend die Federkennlinie des Aggregatelagers 10 komfortmindernd verschiebt.

Dem wirken jedoch die Stellfedern 22 als Positionierfederelemente entgegen, die die äußeren Ringzylinder 24a relativ zum Außengehäuse 12 des Aggregatelagers 10 in unveränderter Position halten, während die inneren Ringzylinder 24b unter Verdrängung des in den Dämpfungseinrichtungenen 24 befindlichem Hydrauliköl über die Durchströmkanäle 30 und die Drosselventile 36 mit dem Lagerkern 14 bzw. mit der Stützwand 14b nach unten verlagert werden. Die Progressionsfederelement-Spaltabstände s bzw. der Einfederweg und der Ausfederweg bleiben in dem konstruktiv vorgegebenen Rahmen erhalten.

Erst ein schnelleres Durchfedern des Aggregatelagers 10 aufgrund einer höheren dynamischen Belastung (zum Beispiel beim Überfahren einer Bodenerhebung) führt dann dazu, dass aufgrund der durch die Kanäle 30, 32 und den Drosselventilen 36 eingestellten Dämpferwirkung der Dämpfereinrichtungen 24 die Stellfeder 22 die Ringzylinder 24a nicht mehr zeitgleich nachführen kann und abhängig von der Belastungsrichtung der untere Progressionsfederelement-Spaltabstand s öder der obere Progressionsfederelement-Spaltabstand s aufgebraucht wird und dadurch schließlich der das Progressionsfederelement ausbildende federhärtere Anschlag 28 an der Stirnwand 12b des Außengehäuses 12 anschlägt bzw. zur Wirkung kommt.

Der Wirkmechanismus ist in Ein- und Ausfederrichtung des Aggregatelagers 10 gleich.

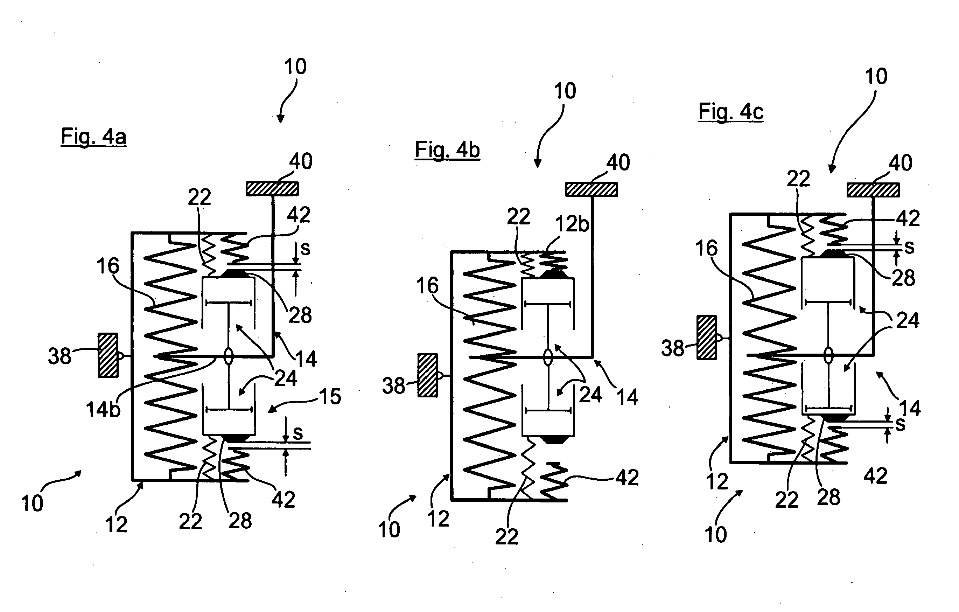

Die Fig. 4a bis 4c zeigen nunmehr Prinzipskizzen des Aggregatelagers 10, wobei funktionell gleiche Teile mit gleichen Bezugszeichen versehen, gegenständlich aber vereinfacht dargestellt sind.

Die Fig. 4a zeigt die der Fig. 1 des Aggregatelagers 10 entsprechende, statische Mittelstellung (Grundstellung oder Konstruktionslage), bei der durch entsprechende Auslegung der Tragfeder 16 und der Dämpfungseinrichtungen 24 in Verbindung mit den Stellfedern 22 der obere Progressionsfederelement-Spaltabstand s und der untere Progressionsfederelement-Spaltabstand s zwischen dem mit dem Aufbau 40 des Kraftfahrzeuges verbundenen Lagerkern 14 und dem mit dem Hilfsrahmen 38 verbundenen Außengehäuse 12 bestimmen. Das Aggregatelager kann selbstverständlich so ausgelegt sein, dass der obere und der untere Progressionsfederelementspaltabstand der Grundstellung betragsmäßig unterschiedlich sind. Den die Progressionsfederelemente ausbildenden Anschlägen 28 sind hier am Außengehäuse 12 angebundene Anschlagfedern 42 zugeordnet, die die Progressionsfederelement-Spaltabstände s definieren und ebenfalls Bestandteil der Progressionsfederelemente bilden. Ein derartiger Aufbau mit zugeordneter Anschlagfeder wäre grundsätzlich auch in der gegenständlichen Ausführung gemäß den Fig. 2 und 3 möglich, zum Beispiel in Gestalt eines weiteren elastomeren Anschlags, der beabstandet (Spaltabstand s) zum Anschlag 28 am Außengehäuse 12 angeordnet ist, was hier aber nicht dargestellt ist.

Die Fig. 4c zeigt die in der Fig. 3 dargestellte, aus der Mittelstellung heraus durch Zuladung eingefederte Position des Aggregatelagers 10, bei der die durch die Stellfedern 22 und die Dämpfungseinrichtungen 24 bewirkten Progressionsfederelement-Spaltabstände s durch Ausnutzung des verfügbaren Verschiebeweges der Ringzylinder 24a, 24b zueinander noch erhalten ist, die komfortable Federkennlinie also noch weitestgehend ohne Einsetzen der härteren Anschläge 28, 42 gegeben ist. Die relativ weiche Federkennlinie bleibt in diesem Zustand noch erhalten, woraus eine komfortablere Schwingungs- und Geräuschdämpfung resultiert.

Schließlich zeigt die Fig. 4b einen Zustand des Aggregatelagers 10, bei dem unter dynamischer Belastung oberhalb eines definierten Kraftamplituden-Frequenzverhältnisses dieses bzw. der Lagerkern 14 aus der Mittelstellung (Fig. 2 bzw. 4a) heraus in Ausfederrichtung beschleunigt ist, wodurch die Dämpfungseinrichtungen 24 verhärtet bzw. blockiert sind und somit die Haltekräfte der Stellfedern 22 überwinden. In Folge dessen wird bei entsprechender Verformung der Stellfedern 22 der obere Anschlag 28 (gegebenenfalls mit der Anschlagfeder 42) gegen die obere Stirnwand 12b des Außengehäuses 12 in Wirkverbindung gebracht und die Gesamtfederrate des Aggregatelagers 10 entsprechend angehoben.

Je nach Auslegung der Überströmkanäle 30, 32, 34 (Fig. 2 und 3) und der Drosselventile 36 kann die hydraulische Dämpfungswirkung des

Aggregatelagers 10 zur Bedämpfung hochfrequenter Schwingungen und zur Bedämpfung von niedrigeren Aufbau-Eigenfrequenzen gezielt beeinflusst werden.

## Patentansprüche

1. Aggregatelagerung in einem Fahrzeug, insbesondere in einem Kraftfahrzeug, mit einem Feder- und Dämpfersystem mit einem Feder-/Dämpferelement (15), das zwischen zwei relativ zueinander verlagerbaren Fahrzeugmassen (38, 40) angeordnet ist, wobei das eine Feder-/Dämpferelement eine Dämpfereinrichtung (24) sowie ein Positionierfederelement (22) aufweist, die mittelbar oder unmittelbar miteinander gekoppelt sowie in Reihe geschaltet sind und die sich an der jeweils zugeordneten Fahrzeugmasse (38, 40) abstützen und/oder dort angebunden sind, und wobei auf der dämpferabgewandten Positionierfederelementseite des Feder-/Dämpferelementes (15) ein weiteres ein- oder mehrteiliges Federelement in Form eines Progressionsfederelementes (28, 42) als weiterer Bestandteil des Feder-/Dämpferelementes (15) angeordnet ist, das, mittelbar oder unmittelbar, an der Dämpfereinrichtung (24) und/oder an der positionierfederelementseitigen Fahrzeugmasse (38, 40) angebunden ist und das in einer definierten Grundstellung einen definierten, progressionsfederelementseitigen Spaltabstand (s) als Federweg ausbildet, **dadurch gekennzeichnet,**
**dass** zwei Feder-/Dämpferelemente (15) Bestandteil eines hydraulisch dämpfendes Aggregatelagers (10) sind, mit einem an einem Aggregat als Fahrzeugmasse befestigten Lagerkern (14) und einem an einem tragenden Bauteil als weiterer Fahrzeugmasse befestigten Außengehäuse (12) sowie mit einer zwischen dem Außengehäuse (12) und dem Lagerkern (14) eingesetzten Stützwand (14b) mit einer gummielastischen Tragfeder (16), die das Außengehäuse (12) in einer obere und eine untere, geschlossene Hydraulikkammer (18, 20) unterteilen, dass die mit Flüssigkeit befüllten Hydraulikkammern (18, 20) über zumindest eine Drosseleinrichtung (30, 32, 34, 36) mit definiertem Durchströmquerschnitt miteinander verbunden sind, und
**dass** zwischen dem Lagerkern (14) und dem Außengehäuse (12) in entgegengesetzte Richtungen wirkende Anschläge (28) als Progressionsfederelemente vorgesehen sind, wobei jeder Anschlag (28) über zumindest eine je Hydraulikkammer (18, 20) vorgesehene, teleskopisch in sich verschiebbare, volumenveränderliche Dämpfereinrichtung (24) gehalten ist, welche Dämpfereinrichtungen (24) andererseits an der Stützwand (14b) des Lagerkerns (14) abgestützt und über in der Stützwand (14b) vorgesehene Drosseleinrichtungen (30, 32, 34, 36) mit definiertem Durchströmquerschnitt miteinander verbunden sind, wobei ferner zwischen dem Außengehäuse (12) und den Anschlägen (28; 42) jeweils eine Stellfeder (22) als Positionierfederelement vorgesehen ist.

2. Aggregatlagerung nach Anspruch 1, **dadurch gekennzeichnet, dass** die Größe des Progressionsfederelement-Spaltabstandes (s) durch die Länge des entspannten Positionierfederelementes (28, 42) und/oder durch das Hystereseverhalten der Dämpfereinrichtung definiert ist.

3. Aggregatlagerung nach Anspruch 1 oder 2, **dadurch gekennzeichnet, dass** das wenigstens eine Feder-Dämpferelement (15) so ausgelegt ist, dass das Positionierfederelement (22) die Dämpfereinrichtung (24) bei einer definierten Belastung, insbesondere bei einer definierten statischen oder quasistatischen Belastung, und einer dadurch bedingten Relativverlagerung der beiden Fahrzeugmassen (38, 40) in Funktionsrichtung des Feder-/Dämpferelementes zueinander so nachführt, dass sich ein Progressionsfederelement-Spaltabstand, insbesondere in etwa der Progressionsfederelement-Spaltabstand (s) der Grundstellung, einstellt, während bei einer demgegenüber definiert größeren, insbesondere dynamischen Belastung, die zeit- und belastungsabhängige Längenanpassung der Dämpfungseinrichtung (24) nicht ausreicht, um die Änderung des Progressionsfederetement-Spaltabstandes (s) kleiner zu halten als den Progressionsfederelement-Spaltabstand (s) im statischen oder quasistatischen Belastungszustand und dadurch das Progressionsfederelement (28, 42) unter Überbrückung des Progressionsfederelement-Spaltabstandes (s) in eine Anlage- und Wirkverbindung mit dem entsprechend spaltabstandseitig zugeordneten Bauteil (24, 40) gelangt.

4. Aggregatlagerung nach einem der vorhergehenden Ansprüche, **dadurch gekennzeichnet, dass** das Positionierfederelement (22) und das Progressionsfederelement (28, 42) durch separate Federelemente oder mehrere an einem Bauteil ausgebildete Federelementabschnitte gebildet sind oder dass das Positionierfederelement (22) und das Progressionsfederelement (42) durch ein einziges Federelement, insbesondere ein Elastomerelement, gebildet sind, das eine progressive Federkennlinie aufweist, insbesondere eine progressive Federkennlinie mit einer ab einem definierten Verlagerungsweg stark ansteigenden hoher Progression.

5. Aggregatelagerung nach einem der vorhergehenden Ansprüche, **dadurch gekennzeichnet, dass** das Aggregatelager im Wesentlichen rotationssymmetrisch mit einem trommelförmigen Außengehäuse (12), einem durch eine Anschlusshülse (14a) und eine ringscheibenförmige Stützwand (14b) gebildeten Lagerkern (14) und einer ringförmig zwischen der Stützwand (14b) und den Umfangswänden (12a) des Außengehäuses (12) fest verbundenen Tragfeder (16) gebildet ist.

6. Aggregatelagerung nach einem der vorhergehenden Ansprüche, **dadurch gekennzeichnet, dass** die Dämpfereinrichtungen (24) in den Hydraulikkammern (18, 20) durch teleskopisch ineinander verschiebliche Ringzylinder (24a, 24b) ausgeführt sind, von denen jeweils ein Ringzylinder (24a) den Anschlag (28), der bevorzugt ringförmig ausgeführt ist, trägt und der andere, korrespondierende Ringzylinder (24b) an der Stützwand (14b) abgestützt ist.

7. Aggregatelagerung nach Anspruch 6, **dadurch gekennzeichnet, dass** die Stellfedern (22) ringförmig um die die Anschläge (28) tragenden Ringzylinder (24a) angeordnet sind und jeweils in Verbindung mit innerhalb der Ringzylinder (24a) eingesetzten, ringförmigen Wänden (26) die Hydraulikkammern (18, 20) nach oben und unten begrenzen.

8. Aggregatelagerung nach Anspruch 7, **dadurch gekennzeichnet, dass** die Stellfedern (22) mit V-förmig nach außen abragenden Wänden (22a, 22b) an der Umfangswand (12a) des Außengehäuses (12) abgestützt sind.

9. Aggregatelagerung nach einem der vorhergehenden Ansprüche, **dadurch gekennzeichnet, dass** in der Stützwand (14b) zwischen den Hydraulikkammern (18, 20) Überströmkanäle (30, 32) zwischen den Dämpfereinrichtungen (24) und weitere Überströmkanäle (34) zwischen den Hydraulikkammern (18, 20) vorgesehen sind.

10. Aggregatelagerung nach Anspruch 9, **dadurch gekennzeichnet, dass** zumindest in die Überströmkanäle (30, 32) zwischen den Dämpfereinrichtungen (24) Drosselventile (36) definierten Durchströmquerschnittes eingesetzt sind.

11. Aggregatelagerung nach Anspruch 9 oder 10, **dadurch gekennzeichnet, dass** die Überströmkanäle (30, 34) der Hydraulikkammern (18, 20) und der Dämpfereinrichtungen (24) durch Querkanäle (32) mit gegebenenfalls eingesetzten Drosselventilen (36) miteinander verbunden sind.

12. Aggregatelagerung nach einem der vorhergehenden Ansprüche, **dadurch gekennzeichnet, dass** die Stellfedern (22), die Anschläge (28) und die ringförmigen Blähwände (26) fest zu einer Vormontageeinheit mit den korrespondierenden Ringzylindern (24a) verbunden sind.

13. Aggregatelagerung nach einem der vorhergehenden Ansprüche, **dadurch gekennzeichnet, dass** die ringförmige Tragfeder (16) aus zumindest zwei, durch eine Hülse, insbesondere eine Metallhülse (16c) miteinander fest verbundenen Ringkörpern (16a, 16b) gebildet ist.

14. Aggregatelagerung nach einem der vorhergehenden Ansprüche, **dadurch gekennzeichnet, dass** wenigstens ein Feder-/Dämpfersystem als Aggregatelager oder als Bestandteil einer Aggregatelagerung zwischen einem Hilfsrahmen und einer Fahrzeugkarosserie oder zwischen einem Hilfsrahmen und einem Antriebsaggregat oder zwischen einer Fahrzeugkarosserie und einem Antriebsaggregat angeordnet ist.

## Claims

1. Assembly mounting means in a vehicle, in particular in a motor vehicle, comprising a spring and damper system having a spring/damper element (15) arranged between two vehicle masses (38, 40) which can be displaced relative to one another, one spring/damper element comprising a damper device (24) and a positioning spring element (22) which are indirectly or directly intercoupled, are connected in series, and are supported on and/or attached to the respective associated vehicle mass (38, 40), and a further one-piece or multi-part spring element formed as a progressive spring element (28, 42) being arranged on the side, facing away from the damper, of the positioning spring element of the spring/damper element (15) as an additional component of the spring/damper element (15), which is indirectly or directly attached to the damper device (24) and/or to the vehicle mass (38, 40) on the positioning-spring-element side and which, in a defined rest position, forms a defined gap clearance (s) on the progressive-spring-element side as a spring deflection path, **characterised in that** two spring/damper elements (15) are components of a hydraulically damping assembly mount (10), comprising a mount core (14) attached to an assembly as a vehicle mass and an outer housing (12) attached to a supporting component as another vehicle mass, and a support wall (14b) inserted between the outer housing (12) and the mount core (14) and having a rubber-resilient bearing spring (16), which divide the outer housing (12) into an upper and a lower, closed hydraulic chamber (18, 20), **in that** at least one throttle device (30, 32, 34, 36) having a defined flow cross section interconnects the liquid-filled hydraulic chambers (18, 20), and **in that** stops (28) acting in opposite directions are provided as progressive spring elements between the mount core (14) and the outer housing (12), each stop (28) being retained by at least one damper device (24), which is telescopically displaceable into itself, has a variable volume and is provided for each hydraulic chamber (18, 20), which damping devices (24), on the other hand, are supported on the support wall (14b) of the mount core (14) and are interconnected via throttle devices (30, 32, 34, 36) provided in the support wall (14b) and having a defined flow cross section, an adjustment spring (22) further being provided in each case as a positioning spring element between the outer housing (12) and the stops (28; 42).

2. Assembly mounting means according to claim 1, **characterised in that** the size of the progressive-spring-element gap clearance (s) is defined by the length of the positioning spring element (28, 42) in a relaxed state and/or by the hysteresis behaviour of the damper device.

3. Assembly mounting means according to either claim 1 or claim 2, **characterised in that** the at least one spring/damper element (15) is constructed such that the positioning spring element (22) guides the damper device (24) under a defined load, in particular under a defined static or quasi-static load, and with a relative displacement of the two vehicle masses (38, 40) in the functional direction of the spring/damper element caused thereby, such that a progressive-spring-element gap clearance, in particular approximately the progressive-spring-element gap clearance (s) in the rest position, is set, whereas under a load, which is by contrast defined as larger and in particular dynamic, the time-dependent and load-dependent length adjustment of the damper device (24) is insufficient to keep the change in the progressive-spring-element gap clearance (s) smaller than the progressive-spring-element gap clearance (s) under the static or quasi-static load, and as a result the progressive spring element (28, 42) is then moved into an abutting and operative connection with the corresponding associated component (24, 40) on the side of the gap clearance by bridging the progressive-spring-element gap clearance (s).

4. Assembly mounting means according to any of the preceding claims, **characterised in that** the positioning spring element (22) and the progressive spring element (28, 42) are formed by separate spring elements or by a plurality of spring element portions formed on a component, or **in that** the positioning spring element (22) and the progressive spring element (42) are formed by a single spring element, in particular an elastomer element, having a progressive spring characteristic curve, in particular a progressive spring characteristic curve that has a strongly increasing high progression from a defined displacement path.

5. Assembly mounting means according to any of the preceding claims, **characterised in that** the assembly mount is substantially rotationally symmetrical with a barrel-shaped outer housing (12), a mount core (14) formed by a connecting bushing (14a) and an annular-disc-shaped support wall (14b), and a bearing spring (16) that is annularly rigidly connected between the support wall (14b) and peripheral walls (12a) of the outer housing (12).

6. Assembly mounting means according to any of the preceding claims, **characterised in that** the damper devices (24) in the hydraulic chambers (18, 20) are formed by ring cylinders (24a, 24b), which can be telescopically displaced into one another, of which respectively one ring cylinder (24a) carries the preferably annular stop (28), and the other corresponding ring cylinder (24b) is supported on the support wall (14b).

7. Assembly mounting means according to claim 6, **characterised in that** the adjustment springs (22) are arranged annularly around the ring cylinder (24a) carrying the stops (28) and, in conjunction with annular walls (26) inserted in the ring cylinders (24a), each delimit the hydraulic chambers (18, 20) towards the top and the bottom.

8. Assembly mounting means according to claim 7, **characterised in that** the adjustment springs (22) are supported on the peripheral wall (12a) of the outer housing (12) by V-shaped outwardly projecting walls (22a, 22b).

9. Assembly mounting means according to any of the preceding claims, **characterised in that** overflow channels (30, 32) between the damper devices (24) are provided in the support wall (14b) between the hydraulic chambers (18, 20), and additional overflow channels (34) are provided between the hydraulic chambers (18, 20).

10. Assembly mounting means according to claim 9, **characterised in that** throttle valves (36) having a defined flow cross section are inserted at least in the overflow channels (30, 32) between the damper devices (24).

11. Assembly mounting means according to either claim 9 or claim 10, **characterised in that** the overflow channels (30, 34) of the hydraulic chambers (18, 20) and the damper devices (24) are interconnected by transverse channels (32) having optionally inserted throttle valves (36).

12. Assembly mounting means according to any of the preceding claims, **characterised in that** the adjustment springs (22), the stops (28), and the annular expanding walls (26) are rigidly connected to the corresponding ring cylinders (24a) to form a pre-assembly unit.

13. Assembly mounting means according to any of the preceding claims, **characterised in that** the annular bearing springs (16) are formed of at least two annular members (16a, 16b) that are rigidly interconnected by a sleeve, in particular a metal sleeve (16c).

14. Assembly mounting means according to any of the preceding claims, **characterised in that** at least one spring/damper system is arranged as an assembly mount or as a component of an assembly mounting means between a subframe and a vehicle body, or between a subframe and a drive assembly, or between a vehicle body and a drive assembly.

## Revendications

1. Suspension de groupe dans un véhicule, en particulier dans un véhicule automobile, avec un système de ressort et d'amortisseur comprenant un élément de ressort/amortisseur (15), qui est aménagé entre deux masses (38, 40) du véhicule qui peuvent se déplacer l'une par rapport à l'autre, dans laquelle le premier élément de ressort/amortisseur présente un dispositif d'amortissement (24) ainsi qu'un élément de ressort de positionnement (22), qui sont couplés l'un à l'autre directement ou indirectement ainsi que raccordés en série et qui s'appuient sur la masse (38, 40) du véhicule qui lui est respectivement affectée et/ou y est raccordée, et dans lequel est aménagé du côté de l'élément de ressort de positionnement opposé à l'amortisseur de l'élément de ressort/amortisseur (15) un autre élément de ressort à une ou plusieurs parties sous la forme d'un élément de ressort de progression (28, 42) comme autre composant de l'élément de ressort/amortisseur (15), qui est directement ou indirectement relié au dispositif d'amortissement (24) et/ou à la masse (38, 40) du véhicule côté élément de ressort de positionnement et qui forme en position de base définie un écartement (s) défini côté élément de ressort de progression comme trajet du ressort, **caractérisé en ce que** :
deux éléments de ressort/amortisseur (15) font partie d'un support de groupe à amortissement hydraulique (10) avec un noyau de support (14) fixé à un groupe comme masse du véhicule et un boîtier externe (12) fixé à un composant de support comme autre masse du véhicule ainsi qu'avec une paroi d'appui (14b) insérée entre le boîtier externe (12) et le noyau de support (14) avec un ressort porteur élastique en caoutchouc (16), qui subdivisent le boîtier externe (12) en une chambre hydraulique supérieure et une chambre hydraulique inférieure fermée (18, 20),
les chambres hydrauliques (18, 20) remplies de liquide sont reliées l'une à l'autre via au moins un dispositif d'étranglement (30, 32, 34, 36) de section transversale de passage définie, et
il est prévu entre le noyau de support (14) et le boîtier externe (12) des butées (28) opérant dans des sens opposés comme éléments de ressort de progression, dans lequel chaque butée (28) est maintenue via au moins un dispositif d'amortissement à volume variable (24) se déplaçant de manière télescopique en soi prévu dans chaque chambre hydraulique (18, 20), lesquels dispositifs d'amortissement (24) s'appuient d'autre part sur la paroi d'appui (14b) du noyau de support (14) et sont reliés l'un à l'autre via des dispositifs d'étranglement (30, 32, 34, 36) prévus dans la paroi d'appui (14b) avec une section transversale de passage définie, dans lequel, par ailleurs, il est prévu entre le boîtier externe (12) et les butées (28 ; 42) respectivement un ressort d'ajustement (22) comme élément de ressort de positionnement.

2. Suspension de groupe selon la revendication 1, **caractérisé en ce que** la grandeur de l'écartement (s) de l'élément de ressort de progression est définie par la longueur de l'élément de ressort de positionnement (28 ; 42) détendu et/ou par le comportement hystérétique du dispositif d'amortissement.

3. Suspension de groupe selon la revendication 1 ou la revendication 2, **caractérisé en ce que** le au moins un élément de ressort/amortisseur (15) est dimensionné afin que l'élément de ressort de positionnement (22) asservisse le dispositif d'amortissement (24) dans le cas d'une sollicitation définie, en particulier dans le cas d'une sollicitation statique ou quasi-statique définie et d'un déplacement relatif conditionné par celle-ci des deux masses (38, 40) du véhicule dans le sens du fonctionnement de l'élément de ressort/amortisseur mutuellement en sorte que se règle un écartement de l'élément de ressort de progression, en particulier plus ou moins dans l'écartement (s) de l'élément de ressort de progression de la position de base, tandis que, lors d'une sollicitation plus grande, en particulier dynamique, définie par rapport à celle-ci, l'adaptation de longueur en fonction du temps et de la sollicitation du dispositif d'amortissement (24) ne suffit pas à maintenir la modification de l'écartement (s) de l'élément de ressort de progression plus petit que l'écartement (s) de l'élément de ressort de progression dans l'état de sollicitation statique ou quasi-statique et, par suite, l'élément de ressort de progression (28, 42) parvient, par pontage de l'écartement (s) de l'élément de ressort de progression, à une liaison de contact active avec le composant (24, 40) affecté de manière correspondante au côté d'écartement (24, 40).

4. Suspension de groupe selon l'une quelconque des revendications précédentes, **caractérisée en ce que** l'élément de ressort de positionnement (22) et l'élément de ressort de progression (28, 42) sont formés par des éléments de ressort séparés ou plusieurs sections d'élément de ressort élaborés sur une pièce ou l'élément de ressort de positionnement (22) et l'élément de ressort de progression (42) sont formés par un élément de ressort unique, en particulier un élément d'élastomère, qui présente une caractéristique de ressort progressive, en particulier une caractéristique de ressort progressive avec une progression plus élevée augmentant fortement à partir d'un trajet de déplacement défini.

5. Suspension de groupe selon l'une quelconque des revendications précédentes, **caractérisée en ce que** le support de groupe est formé sensiblement en symétrie de rotation avec un boîtier externe (12) en forme de tambour, un noyau de support (14) formé d'une douille de raccordement (14a) et d'une paroi d'appui (14b) en forme de disque annulaire et d'un ressort porteur (16) solidement relié en forme circulaire entre la paroi d'appui (14b) et les parois périphériques (12a) du boîtier externe (12).

6. Suspension de groupe selon l'une quelconque des revendications précédentes, **caractérisée en ce que** les dispositifs d'amortissement (24) sont élaborés dans les chambres hydrauliques (18, 20) par des cylindres annulaires (24a, 24b) qui peuvent se déplacer l'un dans l'autre de manière télescopique, parmi lesquels cylindres, respectivement, un cylindre annulaire (24a) porte la butée (28) qui a de préférence une forme annulaire et l'autre cylindre annulaire correspondant (24b) est soutenu sur la paroi d'appui (14b).

7. Suspension de groupe selon la revendication 6, **caractérisée en ce que** les ressorts d'ajustement (22) sont aménagés en forme annulaire autour des cylindres annulaires (24a) portant les butées (28) et délimitent les chambres hydrauliques (18, 20) vers le haut et vers le bas, respectivement, en liaison avec des parois annulaires (26) insérées à l'intérieur des cylindres annulaires (24a).

8. Suspension de groupe selon la revendication 7, **caractérisée en ce que** les ressorts d'ajustement (22) sont soutenus sur la paroi périphérique (12a) du boîtier externe (12) avec des parois saillant vers l'extérieur en forme de V (22a, 22b).

9. Suspension de groupe selon l'une quelconque des revendications précédentes, **caractérisée en ce qu'**il est prévu (24) dans la paroi d'appui (14b) entre les chambres hydrauliques (18, 20) des canaux de décharge (30, 32) et d'autres canaux de décharge (34) entre les chambres hydrauliques (18, 20).

10. Suspension de groupe selon la revendication 9, **caractérisée en ce que** l'on insère au moins dans les canaux de décharge (30, 32) entre les dispositifs d'amortissement (24) des soupapes d'étranglement (36) de section transversale de passage définie.

11. Suspension de groupe selon la revendication 9 ou la revendication 10, **caractérisée en ce que** les canaux de décharge (30, 34) des chambres hydrauliques (18, 20) et des dispositifs d'amortissement (24) sont liés l'un à l'autre par des canaux transversaux (32) avec des soupapes d'étranglement (36) éventuellement incorporées.

12. Suspension de groupe selon l'une quelconque des revendications précédentes, **caractérisée en ce que** les ressorts d'ajustement (22), les butées (28) et les parois d'expansion annulaires (26) sont solidement liés aux cylindres annulaires correspondants (24a) pour constituer une unité de pré-montage.

13. Suspension de groupe selon l'une quelconque des revendications précédentes, **caractérisée en ce que** le ressort porteur annulaire (16) est formé d'au moins deux corps annulaires (16a, 16b) solidement liés l'un à l'autre par une douille, en particulier par une douille métallique (16c).

14. Suspension de groupe selon l'une quelconque des revendications précédentes, **caractérisée en ce qu'**au moins un système de ressort/amortisseur est aménagé comme support de groupe ou comme composant d'une suspension de groupe entre un cadre auxiliaire et une carrosserie de véhicule ou entre un cadre auxiliaire et un groupe d'entraînement ou entre une carrosserie de véhicule et un groupe d'entraînement.
